# FASCICULE DE BREVET EUROPEEN

(11) **EP 3 028 039 B1**
(45) Date de publication et mention de la délivrance du brevet: **20.09.2017**
(21) Numéro de dépôt: 14744348.5
(22) Date de dépôt: 28.07.2014
(51) Int. Cl.: G01N 30/56

(54) **PROCÉDÉ DE FABRICATION D'UNE COLONNE DE CHROMATOGRAPHIE EN PHASE GAZEUSE ET COLONNE OBTENUE PAR UN TEL PROCÉDÉ**
VERFAHREN ZUR HERSTELLUNG EINER GASPHASENCHROMATOGRAFIESÄULE UND MIT EINEM DERARTIGEN VERFAHREN HERGESTELLTE SÄULE
METHOD FOR MANUFACTURING A GAS PHASE CHROMATOGRAPHY COLUMN AND COLUMN OBTAINED USING SUCH A METHOD

(30) Priorité: 31.07.2013 FR 1357615
(43) Date de publication de la demande: 08.06.2016
(73) Titulaire: Commissariat à l'Énergie Atomique et aux Énergies Alternatives, 75015 Paris (FR); Centre National de la Recherche Scientifique, 75016 Paris (FR); Université Claude Bernard Lyon 1, 69622 Villeurbanne Cedex (FR); CPE Lyon FCR, 69100 Villeurbanne (FR)
(72) Inventeur: LEFEBVRE, David, F-38330 Biviers (FR); CHARLEUX, Bernadette, F-69003 Lyon (FR); RICOUL, Florence, F-38950 Quaix-en-Chartreuse (FR); THIEULEUX, Chloé, F-69100 Villeurbanne (FR)
(74) Mandataire: Brevalex
(86) Numéro de dépôt international: PCT/EP2014/066205
(87) Numéro de publication internationale: WO 2015/014808

(56) Documents cités:
- WO-A1-00/11463
- GB-A- 1 045 349
- LI W ET AL: "Sol-gel stationary phases for capillary electrochromatography", JOURNAL OF CHROMATOGRAPHY, ELSEVIER SCIENCE PUBLISHERS B.V, NL, vol. 1044, no. 1-2, 30 juillet 2004 (2004-07-30), pages 23-52, XP004522960, ISSN: 0021-9673, DOI: 10.1016/J.CHROMA.2004.04.079
- JI Z ET AL: "Porous layer open-tubular capillary columns: preparations, applications and future directions", JOURNAL OF CHROMATOGRAPHY, ELSEVIER SCIENCE PUBLISHERS B.V, NL, vol. 842, no. 1-2, 21 mai 1999 (1999-05-21), pages 115-142, XP004167268, ISSN: 0021-9673, DOI: 10.1016/S0021-9673(99)00126-0

## Description

### DOMAINE TECHNIQUE

La présente invention se rapporte à un procédé de fabrication d'une colonne de chromatographie, en particulier en phase gazeuse, comprenant une phase stationnaire, cette phase stationnaire étant réalisée à partir d'un sol. L'invention se rapporte plus particulièrement à un procédé de fabrication d'une colonne capillaire ou d'une microcolonne.

La présente invention se rapporte également à une colonne capillaire ainsi qu'à une microcolonne susceptibles d'être fabriquées par un tel procédé.

### ÉTAT DE LA TECHNIQUE ANTÉRIEURE

La chromatographie en phase gazeuse, ou CPG en abrégé, comme toutes les techniques de chromatographie, est une technique qui permet de séparer et d'analyser des molécules présentes dans un mélange. Elle s'applique principalement aux molécules formées par des composés gazeux ou susceptibles d'être vaporisés par chauffage sans décomposition.

Pour ce faire, le mélange gazeux est introduit dans une colonne qui renferme une phase stationnaire puis est transporté à travers cette colonne à l'aide d'un gaz dit gaz vecteur. Les différentes molécules du mélange se séparent au sein de la colonne et sortent de celle-ci les unes après les autres après un laps de temps qui est fonction de l'affinité de ces molécules avec la phase stationnaire.

Parmi les colonnes les plus couramment utilisées en chromatographie gazeuse, on connaît les colonnes capillaires, constituées par un tube capillaire creux dont le diamètre interne est inférieur à 2 mm, avantageusement inférieur à 1 mm.

De telles colonnes capillaires ont notamment été décrites dans le document WO 00/11463 A1 ainsi que dans la publication de W. Li et al. intitulée "Sol-gel stationary phases for capillary electrochromatography" (Journal of Chromatography A, 1044 (2004), p.23-52).

Récemment, des microcolonnes ont été développées, ces dernières étant fabriquées dans des substrats solides en mettant en oeuvre des techniques de microfabrication, en particulier le micro-usinage ou la photolithographie. Une microcolonne comprend ainsi une microtranchée formée, par exemple par gravure, dans une plaquette telle qu'une plaquette de silicium. La paroi intérieure de la microtranchée est tapissée par une phase stationnaire poreuse déposée, par exemple, par pulvérisation. La microcolonne comprend en outre un capot scellé sur la plaquette destiné à fermer la microtranchée, et à délimiter un canal par lequel s'écoule le mélange à analyser. Ce capot peut être formé par une autre plaquette ou par une couche qui peut notamment être en silicium, en oxyde de silicium ou en un matériau polymère.

Les colonnes capillaires, ou les microcolonnes, ont généralement un diamètre interne, ou l'une au moins des longueurs transversales internes, inférieur(e) à 1 mm, le plus souvent compris(e) entre 20 µm et 500 µm. Leurs longueurs peuvent être comprises entre quelques dizaines de cm et 100 m.

Certaines colonnes capillaires désignées par le terme PLOT, abrégé de l'expression anglaise Porous Layer Open Tubular, comportent une phase stationnaire solide et poreuse, d'épaisseur classiquement comprise entre 5 nm et 50 µm.

Ces colonnes capillaires PLOT comprennent une phase stationnaire organique ou inorganique qui présente une surface développée importante leur permettant de retenir les molécules légères par des interactions de type gaz/solide. Ces colonnes sont principalement utilisées pour la séparation des gaz permanents et des composés organiques se présentant sous forme gazeuse à la température ambiante, les gaz permanents étant définis comme les gaz dont la température critique est inférieure à la température ambiante et qui ne peuvent être liquéfiés par simple compression. Il s'agit par exemple de l'hydrogène, de l'oxygène, de l'azote, de l'argon, du sulfure d'hydrogène ou encore du méthane. Parmi les composés organiques se présentant sous forme gazeuse à la température ambiante, on peut notamment citer les hydrocarbures légers, comme les alcanes linéaires ou ramifiés répondant à la formule CₙH₂ₙ₊₂, n étant un nombre entier inférieur ou égal à 5, les alcènes ou encore les diènes tels que le pentadiène.

Les phases stationnaires inorganiques couramment utilisées dans les colonnes capillaires PLOT sont des phases stationnaires en silice poreuse, en alumine poreuse ou en polymère poreux. De telles phases stationnaires inorganiques en silice ou en alumine résistent en effet relativement bien au phénomène dit de "bleeding". Ce phénomène de "bleeding" se traduit par le décrochage de parties de phase stationnaire se produisant lorsqu'une analyse chromatographique est conduite à forte température. Ces parties de phase stationnaire qui se sont décrochées sont transférées dans le flux gazeux formé par le gaz vecteur et le mélange vaporisé, ce qui réduit l'efficacité de la colonne capillaire. En outre, ces parties de phase stationnaire viennent augmenter la ligne de base du chromatogramme et contribuent ainsi au signal détecté en sortie de colonne de chromatographie, lorsque certains types de détecteurs, tel qu'un détecteur par ionisation de flamme (en anglais Flame lonization Detector ou FID en abrégé), sont utilisés.

Une phase stationnaire en silice poreuse peut cependant être préférée à une phase stationnaire en alumine poreuse pour la séparation des composés organiques se présentant sous forme gazeuse à la température ambiante et qui sont réactifs comme le pentadiène, car de tels composés organiques peuvent être dégradés par l'activité catalytique de l'alumine.

Toutefois, les procédés actuels mis en oeuvre pour la fabrication de colonnes capillaires poreuses ne permettent pas de constituer des colonnes capillaires de faible diamètre, en particulier dont le diamètre est inférieur à 250 µm.

Or, il est bien établi que les colonnes capillaires de chromatographie en phase gazeuse de section circulaire sont d'autant plus efficaces en termes de séparation des molécules présentes dans le mélange que leur diamètre interne est faible. En particulier, plus le diamètre interne est faible, plus la séparation chromatographique est précise et rapide. *A contrario,* plus le diamètre interne est faible, plus la capacité totale de la colonne diminue, le volume de la phase stationnaire diminuant.

Aussi, l'objectif de l'invention est de proposer un procédé permettant de combler ce manque, en permettant de constituer des colonnes capillaires de type PLOT, dont le diamètre peut atteindre quelques dizaines de µm, tout en maîtrisant les caractéristiques de la phase stationnaire, et en particulier l'épaisseur et/ou la porosité, sur toute la longueur de la colonne.

Par ailleurs, l'invention s'applique également aux microcolonnes précédemment évoquées. Elle permet notamment la réalisation de microcolonnes de faible section présentant, par exemple, au moins une de ses longueurs transversales internes mesurant quelques dizaines de µm, dont la phase stationnaire est poreuse.

Des microcolonnes de type PLOT ont déjà été décrites, notamment dans la publication (J.Vial et al., Journal of Chromatography A, 1218, 2011, pages 3262-3266, [1]).

Dans cette publication **[1],** les auteurs ont réalisé le dépôt, sur la paroi interne d'une microtranchée réalisée dans une plaquette de silicium, d'une phase stationnaire de silice poreuse par pulvérisation ionique. Ils obtiennent le dépôt, dans une microtranchée de 100 µm de profondeur et de 75 µm de largeur, d'une phase stationnaire de silice présentant une épaisseur de l'ordre de 0,75 µm, qui leur permet de séparer avec succès un mélange comprenant du méthane, de l'éthane, du propane et du butane. Cependant, la porosité de cette phase stationnaire déposée n'étant pas suffisamment importante, les auteurs ont, dans un premier temps, augmenté son épaisseur jusqu'à une valeur de l'ordre de 1,5 µm. Puis, dans un deuxième temps, ils ont développé une puce à piliers pour assurer une séparation totale du méthane et de l'éthane se traduisant par des pics distincts sur la ligne de base. Or, ces deux stratégies s'accompagnent de désavantages certains : une phase stationnaire d'épaisseur trop importante diminue l'efficacité de la séparation, et l'utilisation de puce à piliers impose le recours à d'importantes pressions de fonctionnement, ce qui ne permet pas toujours d'utiliser la microcolonne à son point de fonctionnement optimum. De plus, ce procédé doit se faire avant la mise en place et le scellement du capot sur la plaquette de silicium, ce qui ne permet pas d'avoir un dépôt homogène de phase stationnaire de silice poreuse sur toute la paroi interne de la microcolonne.

Le but de l'invention est par conséquent de pallier les inconvénients de l'art antérieur et de proposer un procédé de fabrication d'une colonne de chromatographie, en particulier en phase gazeuse, comprenant une phase stationnaire qui puisse être mis en oeuvre pour une colonne capillaire ainsi que pour une microcolonne de faibles dimensions, c'est-à-dire pour une colonne capillaire présentant un diamètre interne inférieur ou égal à 2 mm, avantageusement inférieur ou égal à 1 mm, de préférence compris entre 50 µm et 500 µm et, plus préférentiellement encore, entre 50 µm et 250 µm, ainsi que pour une microcolonne dont l'une au moins des longueurs transversales internes est inférieure ou égale à 500 µm, avantageusement inférieure ou égale à 250 µm et, de préférence, comprise entre 20 nm et 250 nm.

Ce procédé doit en outre permettre d'obtenir une phase stationnaire qui soit déposée de manière régulière et homogène sur l'ensemble de la paroi interne de la colonne de chromatographie. En particulier, lorsque cette colonne est une microcolonne, la phase stationnaire doit également être présente sur la paroi interne de la microtranchée et du capot formant cette microcolonne.

### EXPOSÉ DE L'INVENTION

Les buts précédemment énoncés ainsi que d'autres sont atteints, en premier lieu, par un procédé de fabrication d'une colonne de chromatographie, en particulier en phase gazeuse, de type colonne capillaire ou microcolonne, comprenant une phase stationnaire, cette phase stationnaire étant réalisée à partir d'un sol (ou d'une solution sol-gel), ledit sol comprenant un agent porogène, le procédé comprenant les étapes (a) à (c) suivantes :
(a) l'introduction de ce sol à une première extrémité de la colonne,
(b) le déplacement dudit sol en direction de la deuxième extrémité de la colonne, de telle sorte qu'une couche de sol se forme sur la paroi interne de la colonne, cette couche étant apte à former un gel sur ladite paroi interne, et
(c) le séchage du gel,
ainsi que l'étape (d) suivante :
(d) l'élimination de l'agent porogène de la couche formée, de façon à constituer une couche poreuse, et notamment microporeuse ou mésoporeuse, la taille et/ou la densité des pores étant maîtrisée, cette couche poreuse constituant la phase stationnaire.

Un tel procédé peut avantageusement s'appliquer à des colonnes capillaires ou à des microcolonnes de faibles dimensions.

Le procédé selon l'invention peut également comporter une ou plusieurs des caractéristiques suivantes, prises isolément ou selon les combinaisons techniquement réalisables :
- préalablement à l'introduction du sol dans la colonne, la paroi interne de la colonne est soumise à un traitement dit "de préparation", apte à renforcer l'adhésion du sol sur la paroi interne, un tel traitement visant à augmenter le caractère hydrophile de la paroi ;
- préalablement à l'introduction du sol dans la colonne, la paroi interne de la colonne subit un traitement dit "d'activation" apte à renforcer l'adhésion de la phase stationnaire, un tel traitement visant à permettre un greffage covalent entre le gel et la paroi interne lors de la condensation du gel ;
- le sol forme un bouchon, s'étendant à partir de la première extrémité de la colonne et sur une longueur inférieure aux deux tiers, de préférence inférieure à la moitié, avantageusement inférieure au tiers et, préférentiellement, inférieure au dixième, de la longueur totale de la colonne, le bouchon étant déplacé le long de la colonne sous l'effet d'une pression, en particulier sous l'effet de la pression d'un gaz ou d'un fluide supercritique ;
- l'agent porogène est choisi parmi un tensioactif, notamment le bromure de cétyltriméthylammonium (CTAB), les copolymères diblocs d'oxyde d'éthylène et d'oxyde de propylène, et les copolymères triblocs d'oxyde d'éthylène et d'oxyde de propylène ;
- l'agent porogène est un polyoxyde d'éthylène de masse molaire moyenne comprise entre 50.000 et 300.000 g/mol ou un polyéthylèneglycol de masse molaire moyenne comprise entre 50.000 et 300.000 g/mol. Par masse molaire moyenne, on entend une masse molaire moyenne en nombre ou en masse.
- l'étape (d) d'élimination de l'agent porogène est réalisée à l'issue de l'étape (c) de séchage, par un traitement choisi parmi une calcination, un lavage, par exemple à l'aide d'un solvant organique de type alcool ou acétone, et une insolation UV préférentiellement en milieu redox ;
- le gaz mis en oeuvre à l'étape (b) et/ou à l'étape (c) est un gaz inerte, tel que l'hélium ou de l'azote, ou de l'air, en particulier de l'air sec.

La technique sol-gel est bien connue de l'Homme du métier. D'une façon générale, la solution sol-gel ou "sol" comporte un ou plusieurs précurseurs à base d'éléments métalliques ou métalloïdes (composés organométalliques ou sels métalliques), un ou plusieurs solvants (par exemple, un solvant organique) et, de préférence, un agent porogène, comme dans le cas du sol mis en oeuvre dans le procédé selon l'invention.

Les précurseurs contenus dans ce sol subissent une étape d'hydrolyse et une étape de condensation, pour former un réseau d'oxydes emprisonnant le solvant, de sorte à former un gel.

Le gel est ensuite séché, de façon à former un matériau solide.

Ainsi, le sol comporte un matériau précurseur, généralement choisi parmi les composés de formule M(X)ₙ, dans laquelle :
- X est un groupe hydrolysable, préférentiellement choisi parmi les groupes alcoxy, esters et halogènes, de préférence alcoxy (en particulier méthoxy ou, de préférence, éthoxy), et
- M représente le silicium (n=4), l'aluminium (n=3) ou un métal tétravalent (n=4), par exemple Ti, Zr ou encore Sn.

Le sol comporte également un solvant, notamment un solvant organique, et de l'eau, et de préférence un catalyseur d'hydrolyse.

De préférence, le matériau précurseur est un silane, en particulier de l'orthosilicate de tétraéthyle, également dénommé tétraéthoxysilane ou TEOS en abrégé, ce qui permet de réaliser une phase stationnaire en silice.

Les réactions mises en oeuvre_s'écrivent schématiquement :
Réaction d'hydrolyse :

   M(X)ₙ + H₂O → M(X)ₙ₋₁-OH + XH
Réactions de condensation :

   M(X)ₙ₋₁-OH + M(X)ₙ → M(X)ₙ₋₁-O-M(X)ₙ₋₁ + XH

   M(X)ₙ₋₁-OH + M(X)ₙ₋₁-OH → M(X)ₙ₋₁-O-M(X)ₙ₋₁ + H₂O

Ces réactions conduisent tout d'abord à la formation d'une solution qui est appelée *"sol",* mais qui peut être, selon les conditions dans lesquelles est réalisée l'hydrolyse des précurseurs d'oxyde, soit un sol au sens strict (c'est-à-dire une solution renfermant des espèce chimiques sous forme de colloïdes), soit une solution renfermant des espèces chimiques sous forme d'oligomères ou de polymères, puis à la formation d'un *"gel"* (c'est-à-dire une masse visqueuse, élastique et présentant une structure de liquide figé) qui est constitué d'un réseau polymérique minéral et dont la viscosité augmente avec le temps.

Le recours à une phase stationnaire de type sol-gel, et notamment une phase stationnaire à base de silice, permet une bonne rétention d'espèces gazeuses légers, tels que des hydrocarbures ayant 5 carbones ou moins, ou des gaz permanents, tout en présentant une bonne résistance à haute température (c'est-à-dire de l'ordre de 250 °C). A l'heure actuelle, on ne peut pas obtenir de telles performances en mettant en oeuvre une phase stationnaire de type polymère.

Ainsi, un objet de l'invention est une colonne de chromatographie, notamment en phase gazeuse, comportant une phase stationnaire prenant la forme d'une couche poreuse, notamment en silice, pouvant présenter une épaisseur inférieure ou égale à 1 µm et pouvant présenter un diamètre des pores de la couche étant préférentiellement compris entre 1 et 10 nm.

Après élimination de la phase solvant emprisonnée dans le gel, ce dernier peut être soumis à des traitements complémentaires comme, par exemple, un traitement thermique permettant de le densifier.

Le fait de former la phase stationnaire directement dans la colonne permet de profiter des réactions de condensation des silanes pour greffer, par liaisons covalentes, la phase stationnaire sur le substrat constitué, en l'espèce, par la paroi interne de la colonne.

Le terme "directement" désigne le fait que la phase stationnaire est formée dans la colonne, par hydrolyse et condensation, après avoir été déposée sur cette dernière. Ainsi, la phase stationnaire n'est pas formée préalablement au dépôt, mais postérieurement. On évite alors des problèmes d'agrégation ou de bouchage de la colonne lors du dépôt.

De plus, on estime que cela confère une meilleure accroche de la phase stationnaire.

En outre, on comprend qu'un tel procédé s'adapte à toute forme de section de la colonne, qu'elle soit circulaire ou polygonale.

Ainsi, le greffage de la phase stationnaire sur la paroi interne de la colonne assure une plus grande stabilité de cette phase stationnaire, en particulier lorsque les analyses chromatographiques sont conduites à forte température. Le phénomène de "bleeding" ou de décrochage de morceaux de phase stationnaire dans le flux gazeux formé par le gaz vecteur et le mélange vaporisé ne se produit plus avec des colonnes fabriquées selon le procédé de l'invention.

En outre, le recours à un procédé sol-gel mettant en oeuvre des agents porogènes permet d'obtenir une phase stationnaire poreuse, en particulier mésoporeuse, dont la porosité est maîtrisée. On contrôle alors la distribution des pores, ces derniers pouvant être répartis régulièrement, selon un réseau et une densité de pores maîtrisés.

Dans ce qui précède et ce qui suit, on entend par "phase stationnaire mésoporeuse", une phase stationnaire poreuse dont la taille des pores est comprise entre 2 et 50 nm, conformément aux recommandations pour la caractérisation de solides poreux de l'International Union of Pure Applied Chemistry (Rouquérol et al., Pure & Applied Chemistry, 66(8), 1994, pages 1739-1758, **[2]**).

On notera que le procédé selon l'invention permet également d'obtenir une phase stationnaire microporeuse, c'est-à-dire une phase stationnaire dont la taille des pores est inférieure à 2 nm, conformément aux recommandations de l'IUPAC (**[2]**). D'une façon générale, la taille des pores peut varier entre 1 nm et 10 nm. La taille des pores dépend de la nature de l'agent porogène utilisé.

La colonne de chromatographie en phase gazeuse peut être une colonne capillaire, auquel cas où elle présente une section circulaire qui présente un diamètre interne inférieur ou égal à 2 mm, avantageusement inférieur ou égal à 1 mm, de préférence compris entre 50 µm et 500 µm et, plus préférentiellement, entre 50 µm et 250 µm.

Cette colonne de chromatographie en phase gazeuse peut également être une microcolonne telle que définie ci-dessus et dont l'une au moins des longueurs transversales internes est inférieure ou égale à 500 µm, avantageusement inférieure ou égale à 250 µm et, de préférence, comprise entre 20 nm et 250 nm.

Dans une version avantageuse de l'invention, la paroi interne de la colonne, avant la mise en oeuvre du procédé, est en silicium, en silice, en silice fondue, en polymère ou en métal. Il n'y a pas de restriction particulière concernant le matériau de la colonne en général, et de sa paroi interne en particulier.

La particularité de ce dépôt sol-gel est de former la phase stationnaire directement à l'intérieur de la colonne, par une méthode de revêtement dite dynamique.

Le terme "dynamique" désigne le fait que le sol est introduit par une première extrémité de la colonne, puis est déplacé le long de cette dernière, jusqu'à une deuxième extrémité, de façon à ce qu'une fine couche de sol se forme sur la paroi interne, notamment du fait du caractère hydrophile de la paroi interne. Selon un mode préféré, la solution introduite se présente sous la forme d'un bouchon, lequel est progressivement déplacé de la première extrémité vers la deuxième extrémité, par exemple sous l'effet de la pression exercée par un gaz ou par un fluide supercritique, tel que du CO₂ supercritique.

Il a été constaté que l'épaisseur de la phase stationnaire ainsi formée est inférieure à 500 nm, cette mesure étant effectuée par observation d'une section au microscope électronique à balayage, après séchage et élimination de l'agent porogène.

Selon un mode de réalisation, ces étapes de dépôt puis de séchage peuvent être répétées. Autrement dit, le procédé peut être répété une ou plusieurs fois, de façon à constituer une phase stationnaire de plus grande épaisseur, par exemple jusqu'à 1 ou 3 µm, voire au-delà.

Les caractéristiques de la phase stationnaire, telles que son épaisseur, sa porosité peuvent être aisément modifiées en jouant sur différents paramètres du procédé, tels que la dilution du sol, sa vitesse de dépôt ou encore la quantité de sol introduite dans la première extrémité de la colonne, les paramètres-clefs étant la vitesse et la dilution. Ces paramètres sont déterminés expérimentalement.

Dans une variante avantageuse de l'invention, la phase stationnaire constituée a une épaisseur inférieure ou égale à 3 µm, avantageusement comprise entre 50 nm et 1 µm et, préférentiellement, entre 200 et 500 nm.

Selon un mode de réalisation de l'invention, l'étape (a) est réalisée en plongeant la première extrémité de la colonne dans le sol contenu dans un flacon et en appliquant une pression de gaz ou de fluide supercritique à l'intérieur du flacon.

Le gaz ou le fluide supercritique utilisé lors de l'étape (a) peut être le même que celui mis en oeuvre lors de l'étape (b).

Ce gaz peut notamment être de l'air mais également un gaz inerte tel que de l'hélium ou de l'azote.

Selon une autre variante avantageuse de l'invention, l'étape (c) est réalisée par une circulation de gaz à l'intérieur de la colonne.

Ce gaz peut être le même que celui mis en oeuvre lors de l'étape (b) et, le cas échéant, lors de l'étape (a).

Selon une première variante de l'invention, l'étape (d) est réalisée par calcination.

Cette calcination peut être réalisée par la circulation d'un gaz sec à l'intérieur de la colonne, la température de ce gaz étant avantageusement comprise entre 100°C et 500°C.

On utilise avantageusement un gaz sec qui peut être l'oxygène ou encore un gaz inerte tel que l'hélium ou l'azote.

Selon une deuxième variante de l'invention, l'étape (d) est réalisée par lavage avec un solvant, ce solvant étant avantageusement un alcool ou une cétone.

Selon une autre variante de l'invention, on peut envisager de reproduire les étapes (a) à (c) au moins une fois avant la mise en oeuvre de l'étape (d).

Selon une variante particulièrement avantageuse de l'invention, le procédé comprend en outre une étape d'activation de la paroi interne de la colonne, cette étape d'activation étant réalisée avant l'étape (a).

En effet, le greffage de la phase stationnaire sur la paroi interne de la colonne peut être avantageusement amélioré par l'activation de cette paroi interne.

Cette étape d'activation de la paroi interne de la colonne peut être réalisée par oxydation de ladite paroi interne.

Dans le cas où cette activation est réalisée par oxydation, elle permet de créer, sur cette paroi interne de la colonne, des liaisons dites réactives comprenant des atomes d'oxygène, telle que des liaisons Si-OH ou A-OH, A désignant le substrat sur lesquels les groupements -OH du gel peuvent se fixer par réaction de condensation. En effet, plus la paroi interne de la colonne présente de liaisons réactives sur lesquelles les groupements aptes à créer une liaison covalente, en particulier des ponts oxo, lors de la condensation du gel, meilleur sera le greffage et, partant, l'accrochage de la phase stationnaire ainsi formée.

Une telle activation peut ne pas être nécessaire lorsque la paroi interne de la colonne présente des liaisons comprenant des atomes d'oxygène, par exemple lorsque la paroi interne de la colonne, ou la colonne elle-même, est en silicium ou en silice, car de telles liaisons silanols existent déjà au niveau d'une telle paroi. Toutefois, une activation par oxydation d'une telle paroi interne peut avantageusement permettre d'augmenter la densité des groupements réactifs silanes et, de ce fait, l'accroche de la phase stationnaire sur la paroi interne de la colonne.

Cette étape d'activation par oxydation de la paroi interne de la colonne peut être réalisée par plasma, par voie gazeuse ou, préférentiellement, par voie liquide.

Selon une variante avantageuse de l'invention, le procédé comprend en outre une étape de préparation de la paroi interne de la colonne, cette étape de préparation étant réalisée avant l'étape (a), pour augmenter le caractère hydrophile de la paroi interne. On comprend que cela favorise le dépôt de solution sol-gel sur la paroi suite au déplacement de la solution à l'intérieur de la colonne. L'objectif est d'obtenir, de préférence, un angle de mouillage (vis-à-vis de l'eau) inférieur à 20°. Cette étape de préparation peut être confondue avec l'étape d'activation précédemment décrite, notamment lorsque cette dernière est un traitement oxydant.

L'invention se rapporte, en deuxième lieu, à une colonne capillaire susceptible d'être fabriquée par le procédé selon l'invention, cette colonne capillaire présentant un diamètre interne inférieur ou égal à 2 mm, avantageusement inférieur ou égal à 1 mm, de préférence compris entre 50 µm et 500 µm et, plus préférentiellement, entre 50 µm et 250 µm.

L'invention se rapporte, en troisième lieu, à une microcolonne susceptible d'être fabriquée par le procédé selon l'invention, cette microcolonne ayant l'une au moins de ses longueurs transversales internes inférieure ou égale à 500 µm, avantageusement inférieure ou égale à 250 µm et, de préférence, comprise entre 20 nm et 250 nm.

D'autres caractéristiques et avantages de l'invention apparaîtront mieux à la lecture du complément de description qui suit, qui se rapporte à un exemple de dispositif susceptible d'être mis en oeuvre avec le procédé de fabrication d'une colonne de chromatographie en phase gazeuse selon l'invention ainsi qu'à deux séparations et analyses chromatographiques conduites, l'une avec une colonne capillaire, l'autre avec une microcolonne, à partir d'un mélange de n-alcanes.

Bien entendu, les exemples qui suivent ne sont donnés qu'à titre d'illustration de l'objet de l'invention et ne constituent en aucun cas une limitation de cet objet.

### BRÈVE DESCRIPTION DES DESSINS

Les figures 1A et 1B illustrent de manière schématique un dispositif permettant de mettre en oeuvre le procédé de fabrication d'une colonne de chromatographie selon l'invention, cette colonne étant une colonne capillaire.
La figure 2 est un chromatogramme obtenu avec la mise en oeuvre d'une colonne capillaire comprenant une phase stationnaire en silice et fabriquée selon le procédé de l'invention.
La figure 3 est un chromatogramme obtenu avec la mise en oeuvre d'une microcolonne comprenant une phase stationnaire en silice et fabriquée selon le procédé de l'invention.

### EXPOSÉ DÉTAILLÉ DE L'INVENTION ET DE MODES DE RÉALISATION PARTICULIERS

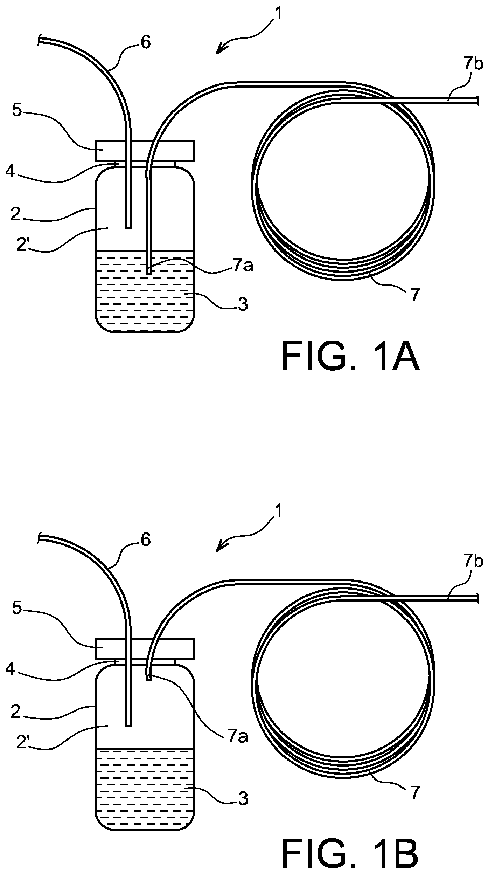

Comme représenté sur la figure 1A, le dispositif 1 permettant de mettre en oeuvre le procédé de fabrication d'une colonne de chromatographie selon l'invention, comprend un flacon 2 qui est partiellement rempli d'un sol 3.

Le sol 3 est une suspension colloïdale qui comprend une phase solide de granulométrie inférieure à 0,2 µm, dispersée dans une phase liquide. La phase solide est préparée à partir du précurseur de tétraéthoxysilane (TEOS) de formule Si(OC₂H₅)₄.

La phase liquide est une solution aqueuse qui comprend un alcool (éthanol) et un tensioactif.

Le tensioactif joue le rôle d'agent porogène puisqu'il permet la formation, dans le sol, de micelles sphériques de même taille, ces micelles délimitant des espaces ou pores. Le tensioactif permet donc d'obtenir un réseau de mésopores ordonnés et de contrôler la surface développée de la phase stationnaire obtenue. En effet, grâce au tensioactif, la porosité de la phase stationnaire est maîtrisée. La taille et la répartition des pores sont contrôlées.

Parmi les tensioactifs susceptibles d'être utilisés dans le sol, on peut citer des tensioactifs cationiques tels que le bromure de cétyl triméthyl-ammonium (abrégé CTAB) ou des copolymères biblocs ou triblocs amphiphiles tels que le copolymère tribloc commercialisé par la société Aldrich sous la dénomination commerciale Pluronic F127.

Dans une variante de l'invention, le tensioactif est présent dans le sol dans un rapport molaire tensioactif/Si compris entre 0,08 et 0,2 et, avantageusement de l'ordre de 0,1. Un tel rapport tensioactif/Si permet d'obtenir un réseau porogène tridmensionnel, par exemple cubique ou hexagonal. En effet, un rapport tensioactif/Si supérieur à 0,2, le réseau porogène est lamellaire et a de fortes chances de s'effondrer lors de l'étape de calcination visant à éliminer le tensioactif.

Ce flacon 2 est muni, au niveau de son col 4, d'un septum 5. Ce septum 5 est traversé de manière étanche, d'une part, par un tube d'injection 6 d'un gaz dans le flacon 2 et, d'autre part, par une colonne capillaire 7 destinée à constituer une colonne de chromatographie conforme à l'invention.

A la place de la colonne capillaire 7, on pourrait tout à fait disposer une microcolonne.

Préalablement à la mise en contact d'une première extrémité de la colonne avec la solution sol-gel, la paroi interne de la colonne subit un traitement par oxydation, de façon à augmenter la densité de groupements OH présents en surface. Cela a pour conséquences :
- l'augmentation du caractère hydrophile de la paroi interne, ce qui favorise le dépôt de sol sur la paroi interne lors du balayage de la colonne par le bouchon de sol,
- la création de sites de greffage du matériau constituant la phase stationnaire avec la paroi interne.

Ce traitement par oxydation est réalisé en voie liquide par le passage d'une solution formée d'éthanol, d'eau et de soude à l'intérieur de la colonne, suivi d'un rinçage à l'eau désionisée puis d'un séchage.

Le tube d'injection 6 est relié à une source d'alimentation du gaz (non représentée) et débouche dans la partie supérieure 2' du flacon 2, au-dessus du niveau du sol 3.

Le gaz est avantageusement un gaz inerte, tel que l'hélium ou l'azote. Mais ce gaz peut également être de l'air. Dans ce cas, le taux d'humidité de l'air est contrôlé pour ne pas interférer avec les conditions de mise en oeuvre du dépôt sol-gel.

La pression de gaz appliquée est adaptée en fonction des dimensions de la colonne capillaire 7. Cette pression de gaz appliquée est avantageusement inférieure ou égale à 10 bar et, préférentiellement comprise entre 0,2 et 4 bar. Une pression de gaz de l'ordre de 2 bar est particulièrement préférée pour une colonne capillaire de 100 µm de diamètre et de 2 m de longueur.

La colonne capillaire 7, quant-à-elle, plonge dans le sol 3 au niveau de sa première extrémité 7a, sa seconde extrémité 7b, située en dehors du flacon 2, étant laissée à la pression atmosphérique.

Bien qu'il n'y ait pas de limitation quant à ses dimensions tant transversales que longitudinales, la colonne capillaire 7 présente un diamètre interne qui est inférieur ou égal à 2 mm, avantageusement inférieur ou égal à 1 mm. De préférence, ce diamètre interne est compris entre 50 µm et 500 µm et, plus préférentiellement encore, entre 50 µm et 250 µm. Elle présente également une longueur qui est avantageusement comprise entre 10 cm et 100 m, avantageusement entre 50 cm et 50m et, plus préférentiellement encore, entre 1 m et 30 m.

Ce dispositif 1, dans sa configuration représentée à la figure 1A, permet de réaliser l'étape de prélèvement d'une quantité déterminée de sol 3. Pour ce faire, on injecte du gaz par le tube d'injection 6 dans l'intérieur du flacon 2. Sous l'effet de la surpression engendrée par l'injection de gaz dans le flacon 2, le sol 3 est poussé dans la cavité interne de la colonne capillaire 7.

Lorsque la quantité de sol 3 introduite est suffisante, par exemple lorsque le sol forme un bouchon de longueur comprise entre 20 et 50 cm à l'intérieur de la colonne, on tire alors légèrement sur la colonne capillaire 7 pour la positionner de telle sorte que sa première extrémité 7a débouche dans la partie supérieure 2' du flacon 2 et ne plonge plus dans le sol 3. Cette configuration du dispositif 1 est représentée sur la figure 1B.

Cette étape qui vient d'être décrite permet de former un "bouchon" de sol dans la cavité de la colonne capillaire 7, à partir de sa première extrémité 7a. La quantité de bouchon prélevée à partir du sol 3 est très nettement supérieure à la quantité nécessaire pour revêtir toute la paroi interne de la colonne capillaire 7, comme on le verra ci-après.

Sous l'effet du maintien de la surpression à l'intérieur du flacon 2, ce bouchon est alors poussé dans la cavité interne de la colonne capillaire 7. Au fur et à mesure du déplacement du bouchon à l'intérieur et le long de la colonne capillaire 7, une fine couche de sol est déposée sur la paroi interne de cette colonne capillaire 7. Le bouchon perd de ce fait une partie de son volume au fur et à mesure de ce déplacement du bouchon à l'intérieur et le long de la colonne capillaire 7. Toutefois, la quantité de sol prélevée initialement est adaptée pour que cette perte soit négligeable. Cette fine couche de sol adhère à cette paroi interne en raison de son caractère hydrophile lié à la présence, dans le sol, de groupements silanes qui vont former des liaisons covalentes avec cette paroi interne.

L'épaisseur de cette fine couche de sol déposée sur la paroi interne de la colonne capillaire 7 peut être ajustée par la concentration de solvant dans le sol. Plus cette concentration est élevée, plus l'épaisseur de cette couche fine de sol diminue lors de l'étape de séchage qui va être décrite ci-dessous. L'épaisseur de cette fine couche de sol peut également être ajustée par la vitesse de déplacement du bouchon de sol à l'intérieur et le long de la colonne capillaire 7. Cette vitesse de déplacement du bouchon de sol dépend, quant à elle, de la surpression de gaz appliquée mais aussi de la quantité de bouchon de sol prélevé et de la viscosité du sol, ce dernier paramètre dépendant à son tour de la composition du sol.

Lorsque le bouchon de sol a atteint la seconde extrémité 7b de la colonne capillaire 7, le gaz injecté s'échappe par cette seconde extrémité 7b laissée libre. La circulation de gaz entretenue dans cette colonne capillaire 7 permet de sécher la fine couche de sol 3 déposée sur la paroi interne de la colonne capillaire 7.

Il y a donc lieu de noter que le gaz permet le déplacement du bouchon à l'intérieur et le long de la colonne capillaire 7 ainsi que le séchage de la fine couche de sol déposée sur la paroi interne de la colonne capillaire 7. Ce séchage de la fine couche de sol va d'ailleurs débuter immédiatement après le dépôt de cette fine couche sur la paroi interne de la colonne capillaire 7.

Sous l'effet de ce séchage, le sol se gélifie et l'alcool puis l'eau s'évaporent. L'évaporation de l'alcool permet au tensioactif de s'organiser en micelles, ces micelles s'organisant à leur tour en réseau, dit réseau porogène, compact. L'évaporation de l'eau, quant à elle, favorise la condensation du gel autour de ces micelles : les groupements silanols du gel n'ayant pas formé de liaisons covalentes au cours de la gélification réagissent, d'une part, entre eux pour créer des ponts siloxane qui forment la base de la matrice de silice et, d'autre part, ou les groupements OH de la paroi interne de la colonne capillaire 7, ce qui renforce, au terme du procédé selon l'invention, l'ancrage covalent de la phase stationnaire, sur cette paroi interne.

Après le séchage, le tensioactif est éliminé pour libérer les mésopores et rendre ainsi disponible toute la surface de la silice mésoporeuse. Cette élimination du tensioactif peut se faire, par exemple, par calcination ou par lavage avec un solvant. Ce solvant peut être un alcool, comme l'éthanol ou l'isopropanol, ou encore une cétone, par exemple l'acétone.

La calcination peut se faire sous flux gazeux, au moyen d'un gaz, notamment d'un gaz inerte tel que ceux mentionnés ci-dessus (hélium ou azote) et à une température comprise entre 100°C et 500°C, cette température étant bien entendu à adapter en fonction du tensioactif présent dans le sol. Ce gaz doit être sec et est avantageusement introduit dans la colonne capillaire par le tube. On peut également utiliser de l'oxygène gazeux qui présente l'avantage d'abaisser la température de cette étape de calcination d'environ 100°C.

### Réalisation d'une colonne capillaire selon le procédé de l'invention

Le procédé a été mis en oeuvre sur une colonne capillaire en silice fondue de 1 m de longueur et de 100 µm de diamètre interne.

### - Activation de la paroi interne de la colonne

Un mélange de Brown réalisé en dissolvant 140 mg de NaOH dans un mélange comprenant 15 ml d'eau et 20 ml d'éthanol a été introduit dans la colonne capillaire, avec un gradient de pression de 1 bar pendant 30 minutes, soit à un débit de l'ordre de 0,2 µl/s. La colonne capillaire a ensuite été lavée à l'eau distillée avec un gradient de pression de 1 bar jusqu'à atteindre un pH neutre en sortie de colonne capillaire. La colonne capillaire a ensuite été séchée par circulation d'azote, avec un gradient de pression de 1 bar.

### - Préparation du sol

Le sol réalisé est formé à partir d'orthosilicate de tétraéthyle (TEOS), d'éthanol et d'eau dans des ratios molaires TEOS / EtOH / H₂O de 1 / 3,8 / 5.

4,4 ml d'éthanol et 4,4 ml de TEOS ont été ajoutés à 1,8 ml d'une solution d'eau et d'acide chlorhydrique de pH=1,25. Cette première solution a été mise au reflux à 60°C pendant 60 min. 102 mg de bromure d'hexadécyltriméthylammonium (CTAB) ont été dissous dans 0,5 ml d'éthanol, sous ultrasons, en chauffant légèrement (30°C).

On a ensuite procédé au mélange, au moyen d'un Vortex, de 1,5 ml de la première solution dans la solution contenant le CTAB. La solution finale obtenue a été filtrée sur une membrane de polytétrafluoroéthylène (PTFE) de porosité de 0,2 µm.

Cette solution finale présente un ratio molaire TEOS / CTAB de 1 / 0,1.

### - Dépôt du sol dans la colonne

Environ 2 µl du sol préparé à l'étape précédente ont été introduits dans la colonne avec un gradient de pression de 1 bar, pendant 10 secondes. On a ensuite procédé à l'étape de séchage en faisant circuler de l'azote avec un gradient de pression de 1 bar pendant 15 minutes à une température de 20°C. On a ensuite procédé à une montée en température de l'azote au rythme de 1°C/minute, jusqu'à atteindre une température de 120°C, température à laquelle la circulation d'azote a été maintenue pendant 7 heures.

### - Calcination et élimination du CTAB

De l'hélium a ensuite été introduit dans la colonne avec un gradient de 0,4 bar pendant 20 minutes à une température de 120°C. On a ensuite procédé à une première montée en température de l'hélium au rythme de 4°C/minute jusqu'à atteindre une première température de 230°C maintenue ensuite pendant 90 minutes, puis à une seconde montée en température de l'hélium au rythme de 1°C/minute jusqu'à atteindre une seconde température de 250°C maintenue ensuite pendant 60 minutes.

### - Séparation des n-alcanes

La colonne capillaire ainsi obtenue après les quatre étapes détaillées ci-dessus a été utilisée pour réaliser la séparation d'un mélange de n-alcanes en C1 à C5.

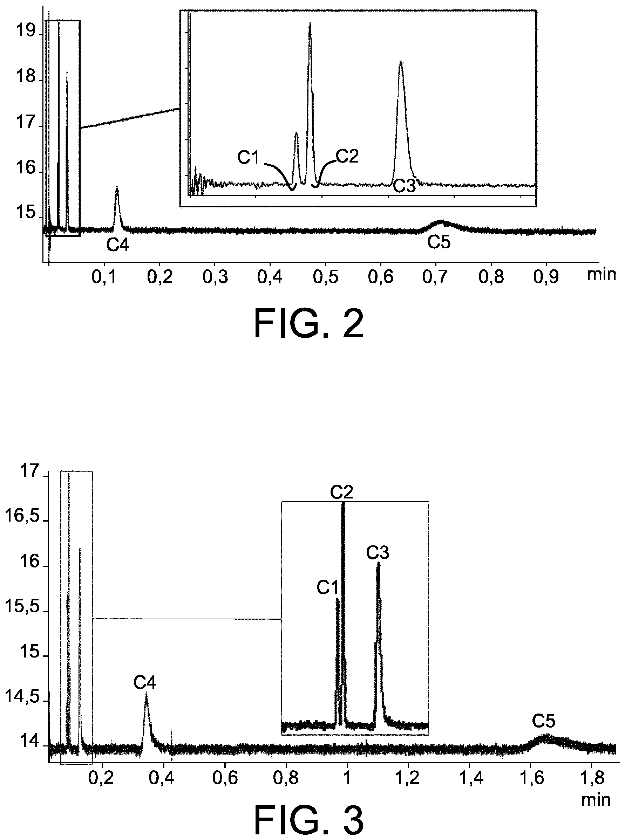

Le chromatogramme obtenu avec cette colonne capillaire après l'injection de 0,5 µl d'un mélange ci-dessus (méthane, éthane, propane, butane et pentane) est reproduit à la figure 2. Ce chromatogramme a été obtenu en raccordant la colonne ainsi constituée à un dispositif d'analyse du commerce de référence Agilent GC6850 série 2, avec détecteur de type Flame Ionisation Detector. Les conditions d'injection étaient les suivantes : la température de la colonne capillaire était de 30°C, le gaz vecteur utilisé était de l'hélium sous une pression de 12 psi.

Le chromatogramme reproduit à la figure 2 montre que tous les composés ont bien été séparés et ce, avec une très bonne efficacité de séparation, par exemple avec 4100 plateaux théoriques par mètre pour l'éthane.

### Réalisation d'une microcolonne selon le procédé de l'invention

Le procédé a été mis en oeuvre sur une microcolonne en silicium de 1,33 m de longueur et de section rectangulaire de 40 µm par 160 µm.

### - Activation de la paroi interne de la colonne

Un mélange de Brown réalisé en dissolvant 140 mg de NaOH dans un mélange comprenant 15 ml d'eau et 20 ml d'éthanol a été introduit dans la microcolonne, avec un gradient de pression de 3 bar pendant 120 minutes, soit à un débit de l'ordre de 0,3 µl/s. La microcolonne a ensuite été lavée à l'eau distillée avec un gradient de pression de 3 bar jusqu'à atteindre un pH neutre en sortie de microcolonne. La microcolonne a ensuite été séchée par circulation d'azote, avec un gradient de pression de 3 bar.

### - Préparation du sol

Le sol réalisé est formé à partir d'orthosilicate de tétraéthyle (TEOS), d'éthanol et d'eau dans des ratios molaires TEOS / EtOH / H₂O de 1 / 3,8 / 5.

4,4 ml d'éthanol et 4,4 ml de TEOS ont été ajoutés à 1,8 ml d'une solution d'eau et d'acide chlorhydrique de pH=1,25. Cette première solution a été mise au reflux à 60°C pendant 60 min. 102 mg de bromure d'hexadécyltriméthylammonium (CTAB) ont été dissous dans 0,5 ml d'éthanol, sous ultrasons, en chauffant légèrement (30°C).

On a ensuite procédé au mélange, au moyen d'un Vortex, de 1,5 ml de la première solution dans la solution contenant le CTAB. La solution finale obtenue a été filtrée sur une membrane de polytétrafluoroéthylène (PTFE) de porosité de 0,2 µm.

Cette solution finale présente un ratio molaire TEOS / CTAB de 1 / 0,1.

### - Dépôt du sol dans la colonne

Environ 1,2 µl du sol préparé à l'étape précédente ont été introduits dans la microcolonne avec un gradient de pression de 4 bar, pendant 30 secondes. On a ensuite procédé à l'étape de séchage en faisant circuler de l'azote avec un gradient de pression de 4 bar pendant 20 minutes à une température de 20°C. On a ensuite procédé à une montée en température de l'azote au rythme de 1°C/minute, jusqu'à atteindre une température de 120°C, température à laquelle la circulation d'azote a été maintenue pendant 7 heures.

### - Calcination et élimination du CTAB

De l'hélium a ensuite été introduit dans la microcolonne avec un gradient de 1,7 bar pendant 20 minutes à une température de 120°C. On a ensuite procédé à une première montée en température de l'hélium au rythme de 4°C/minute jusqu'à atteindre une première température de 230°C maintenue ensuite pendant 120 minutes, puis à une seconde montée en température de l'hélium au rythme de 1°C/minute jusqu'à atteindre une seconde température de 250°C maintenue ensuite pendant 90 minutes.

### - Séparation des n-alcanes

La microcolonne ainsi obtenue après les quatre étapes détaillées ci-dessus a été utilisée pour réaliser la séparation d'un mélange de n-alcanes en C1 à C5.

Le chromatogramme obtenu avec cette microcolonne après l'injection de 500 ppm d'un mélange ci-dessus (méthane, éthane, propane, butane et pentane) est reproduit à la figure 3. Ce chromatogramme a été obtenu en raccordant la colonne ainsi constituée à un dispositif d'analyse du commerce de référence Agilent GC6850 Série 2 avec détecteur de type Flame Ionisation Detector.

Les conditions d'injection étaient les suivantes : la température de la microcolonne était de 30°C, le gaz vecteur utilisé était de l'hélium sous une pression de 12 psi.

Le chromatogramme reproduit à la figure 3 montre que tous les composés ont bien été séparés et ce, avec une très bonne efficacité de séparation, par exemple avec 6600 plateaux théoriques par mètre pour l'éthane.

### BIBLIOGRAPHIE

[1] J.Vial et al., Journal of Chromatography A, 1218, 2011, pages 3262-3266
[2] Rouquérol et al., Pure & Applied Chemistry, 66(8), 1994, pages 1739-1758

## Revendications

1. Procédé de fabrication d'une colonne de chromatographie, en particulier en phase gazeuse, comprenant une phase stationnaire, **caractérisé en ce que** la phase stationnaire est réalisée à partir d'un sol, ledit sol comprenant un agent porogène, ce procédé comprenant les étapes (a) à (c) suivantes :
(a) l'introduction de ce sol à la première extrémité de la colonne,
(b) le déplacement dudit sol en direction de la seconde extrémité de la colonne, de telle sorte qu'une couche de sol se forme sur la paroi interne de la colonne, cette couche étant apte à former un gel sur ladite paroi interne, et
(c) le séchage du gel,
ainsi que l'étape consécutive (d) suivante :
(d) l'élimination de l'agent porogène de la couche formée, de façon à constituer une couche poreuse, et notamment microporeuse ou mésoporeuse, la taille et/ou la densité des pores étant maîtrisée, cette couche poreuse constituant la phase stationnaire.

2. Procédé selon la revendication 1, dans lequel le sol forme un bouchon, s'étendant à partir de la première extrémité de la colonne et sur une longueur inférieure aux deux tiers, de préférence inférieure à la moitié, avantageusement inférieure au tiers et, préférentiellement, inférieure au dixième, de la longueur totale de la colonne, le bouchon étant déplacé le long de la colonne sous l'effet d'une pression, en particulier sous l'effet de la pression d'un gaz ou d'un fluide supercritique.

3. Procédé selon la revendication 1 ou 2, dans lequel l'étape (c) est réalisée par une circulation de gaz à l'intérieur de la colonne, ce gaz étant avantageusement le même que celui mis en oeuvre lors de l'étape (b) et, le cas échéant, lors de l'étape (a).

4. Procédé selon la revendication 2 ou 3, dans lequel le gaz est de l'air ou un gaz inerte tel que l'hélium ou l'azote.

5. Procédé selon l'une quelconque des revendications 1 à 4, dans lequel l'agent porogène est choisi parmi un tensioactif, notamment le bromure de cétyltriméthylammonium (CTAB), les copolymères diblocs d'oxyde d'éthylène et d'oxyde de propylène, et les copolymères triblocs d'oxyde d'éthylène et d'oxyde de propylène.

6. Procédé selon l'une quelconque des revendications 1 à 5, dans lequel l'étape (d) est réalisée après l'étape (c) par un traitement choisi parmi une calcination, un lavage, par exemple à l'aide d'un solvant organique de type alcool ou acétone, et une insolation UV préférentiellement en milieu redox.

7. Procédé selon la revendication 6, dans lequel la calcination est réalisée par la circulation d'un gaz sec à l'intérieur de la colonne, la température de ce gaz étant comprise entre 100°C et 500°C, ce gaz sec étant avantageusement l'oxygène ou un gaz inerte tel que l'hélium ou l'azote.

8. Procédé selon l'une quelconque des revendications 1 à 7, dans lequel les étapes (a) à (c) sont reproduites au moins une fois avant la mise en oeuvre de l'étape (d).

9. Procédé selon l'une quelconque des revendications 1 à 8, dans lequel la paroi interne de la colonne est soumise à un traitement de préparation, apte à renforcer l'adhésion du sol sur la paroi interne, un tel traitement visant à augmenter le caractère hydrophile de la paroi interne, ce traitement de préparation étant préalable à l'étape (a).

10. Procédé selon l'une quelconque des revendications 1 à 9, dans lequel la paroi interne de la colonne est soumise à un traitement d'activation apte à renforcer l'adhésion de la phase stationnaire, un tel traitement visant à permettre un greffage covalent entre le gel et la paroi interne lors de la condensation du gel, ce traitement de préparation étant préalable à l'étape (a).

11. Procédé selon la revendication 10, dans lequel le traitement d'activation de la paroi interne de la colonne est réalisé par oxydation de ladite paroi interne, cette oxydation étant réalisée par plasma, par voie gazeuse ou, préférentiellement, par voie liquide.

12. Procédé selon l'une quelconque des revendications 1 à 11, dans lequel la paroi interne de la colonne est en silicium, en silice, en silice fondue, en polymère ou en métal.

13. Procédé selon l'une quelconque des revendications 1 à 12, dans lequel la phase stationnaire a une épaisseur inférieure ou égale à 3 µm, avantageusement comprise entre 50 nm et 1 µm et, préférentiellement, entre 200 et 500 nm.

14. Procédé selon l'une quelconque des revendications 1 à 13, dans lequel la colonne de chromatographie en phase gazeuse est une colonne capillaire de diamètre interne inférieur ou égal à 2 mm, avantageusement inférieur ou égal à 1 mm, de préférence compris entre 50 µm et 500 µm et, plus préférentiellement, entre 50 µm et 250 µm.

15. Procédé selon l'une quelconque des revendications 1 à 14, dans lequel la colonne de chromatographie en phase gazeuse est une microcolonne dont l'une au moins des longueurs transversales internes est inférieure ou égale à 500 µm, avantageusement inférieure ou égale à 250 µm et, de préférence, comprise entre 20 nm et 250 nm.

16. Colonne capillaire susceptible d'être obtenue par le procédé selon la revendication 14.

17. Microcolonne susceptible d'être obtenue par le procédé selon la revendication 15.

## Patentansprüche

1. Verfahren zum Herstellen einer Chromatographiesäule, insbesondere in Gasphase, enthaltend eine stationäre Phase, **dadurch gekennzeichnet, dass** die stationäre Phase ausgehend von einem Sol hergestellt wird, wobei das Sol einen Porenbildner enthält, wobei dieses Verfahren die nachfolgenden Schritte (a) bis (c) umfasst:
(a) Einführen dieses Sols am ersten Ende der Säule,
(b) Verlagern des Sols in Richtung des zweiten Endes der Säule, so dass sich eine Solschicht an der Innenwand der Säule bildet, wobei diese Schicht dazu geeignet ist, ein Gel an der Innenwand zu bilden, und
(c) Trocknen des Gels,
sowie den darauffolgenden, nachstehenden Schritt:
(d) Beseitigen des Porenbildners aus der gebildeten Schicht, so dass eine poröse, insbesondere mikroporöse bzw. mesoporöse Schicht entsteht, wobei die Größe und/oder die Dichte der Poren kontrolliert werden,
wobei diese poröse Schicht die stationäre Phase bildet.

2. Verfahren nach Anspruch 1, wobei das Sol einen Stopfen bildet, der sich ausgehend von dem ersten Ende der Säule über eine Länge erstreckt, die geringer als zwei Drittel, vorzugsweise geringer als die Hälfte, vorteilhaft geringer als ein Drittel und vorzugsweise geringer als ein Zehntel der Gesamtlänge der Säule ist, wobei der Stopfen unter der Wirkung von Druck, insbesondere unter der Wirkung des Drucks von einem superkritischen Gas bzw. Fluid entlang der Säule verlagert wird.

3. Verfahren nach Anspruch 1 oder 2, wobei der Schritt (c) durch Gasumwälzung innerhalb der Säule erfolgt, wobei dieses Gas vorteilhaft das gleiche ist wie bei der Durchführung von Schritt (b) und gegebenenfalls von Schritt (a).

4. Verfahren nach Anspruch 2 oder 3, wobei das Gas Luft oder ein inertes Gas, wie etwa Helium oder Stickstoff, ist.

5. Verfahren nach einem der Ansprüche 1 bis 4, wobei der Porenbildner ausgewählt ist aus einem Tensid, insbesondere Cetyltrimethylammoniumbromid (CTAB), Ethylenoxid- und Propylenoxid-Diblock-Copolymeren, Ethylenoxid- und Propylenoxid-Triblock-Copolymeren.

6. Verfahren nach einem der Ansprüche 1 bis 5, wobei Schritt (d) nach Schritt (c) durch eine Behandlung erfolgt, ausgewählt aus einer Kalzinierung, Waschung, beispielsweise mit Hilfe eins organischen Lösungsmittels vom Typ Alkohol oder Aceton, und einer UV-Bestrahlung, vorzugsweise in Redoxmilieu.

7. Verfahren nach Anspruch 6, wobei die Kalzinierung durch Umwälzung von trockenem Gas innerhalb der Säule erfolgt, wobei die Temperatur dieses Gases zwischen 100°C und 500°C liegt, wobei dieses trockene Gas vorteilhaft Sauerstoff oder ein inertes Gas, wie Helium oder Stickstoff, ist.

8. Verfahren nach einem der Ansprüche 1 bis 7, wobei die Schritte (a) bis (c) zumindest einmal vor dem Durchführen von Schritt (d) wiederholt werden.

9. Verfahren nach einem der Ansprüche 1 bis 8, wobei die Innenwand der Säule einer vorbereitenden Behandlung unterzogen wird, die dazu geeignet ist, die Haftung des Sols an der Innenwand zu verstärken, wie etwa einer Behandlung, die darauf abzielt, den hydrophilen Charakter der Innenwand zu erhöhen, wobei diese vorbereitende Behandlung vor Schritt (a) erfolgt.

10. Verfahren nach einem der Ansprüche 1 bis 9, wobei die Innenwand der Säule einer Aktivierungsbehandlung unterzogen wird, die dazu geeignet ist, die Haftung der stationären Phase zu verstärken, wobei eine solche Behandlung darauf abzielt, ein kovalentes Pfropfen zwischen Gel und Innenwand bei der Kondensation des Gels zu gestatten, wobei diese vorbereitende Behandlung vor Schritt (a) erfolgt.

11. Verfahren nach Anspruch 10, wobei die Aktivierungsbehandlung der Innenwand der Säule durch Oxidation der Innenwand erfolgt, wobei diese Oxidation durch ein Plasma, über die Gasphase oder vorzugsweise über die Flüssigphase erfolgt.

12. Verfahren nach einem der Ansprüche 1 bis 11, wobei die Innenwand der Säule aus Silicium, Kieselerde, Kieselglas, Polymer oder Metall besteht.

13. Verfahren nach einem der Ansprüche 1 bis 12, wobei die stationäre Phase eine Dicke geringer oder gleich 3 µm, vorteilhaft zwischen 50 nm und 1 µm und vorzugsweise zwischen 200 und 500 nm, aufweist.

14. Verfahren nach einem der Ansprüche 1 bis 13, wobei die Chromatographiesäule in Gasphase eine kapillare Säule mit einem Innendurchmesser geringer oder gleich 2 mm, vorteilhaft geringer oder gleich 1 mm, vorzugsweise zwischen 50 µm und 500 µm und noch bevorzugter zwischen 50 µm und 250 µm, ist.

15. Verfahren nach einem der Ansprüche 1 bis 14, wobei die Chromatographiesäule in Gasphase eine Mikrosäule ist, von welcher zumindest eine der transversalen, inneren Längen geringer oder gleich 500 µm, vorteilhaft geringer oder gleich 250 µm und vorzugsweise zwischen 20 nm und 250 nm, ist.

16. Kapillare Säule, die mit dem Verfahren nach Anspruch 14 erhalten werden kann.

17. Mikrosäule, die mit dem Verfahren nach Anspruch 15 erhalten werden kann.

## Claims

1. A method for manufacturing a chromatography column, in particular for gas phase chromatography, comprising a stationary phase, **characterizing in that** the stationary phase is made from a sol, said sol comprising a pore-forming agent, this method comprising the following steps (a) to (c):
(a) introducing this sol at the first end of the column,
(b) moving said sol towards the second end of the column, so that a sol layer is formed on the internal wall of the column, this layer being able to form a gel on said internal wall, and
(c) drying of the gel,
as well as the following consecutive step (d):
(d) removing the pore-forming agent from the formed layer, so as to form a porous layer, and in particular a microporous or mesoporous layer, the size and/or the density of the pores being controlled, said porous layer forming the stationary phase.

2. The method according to claim 1, wherein the sol forms a plug, extending from the first end of the column and over a length of less than two-thirds, preferably less than the half, advantageously less than the third and preferentially less than the tenth, of the total length of the column, the plug being moved along the column under the effect of a pressure, in particular under the effect of the pressure of a gas or of a supercritical fluid.

3. The method according to claim 1 or 2, wherein step (c) is carried out by circulating a gas inside the column, this gas being advantageously the same as the one applied during step (b) and, if required, during step (a).

4. The method according to claim 2 or 3, wherein the gas is air or an inert gas such as helium or nitrogen.

5. The method according to any of claims 1 to 4, wherein the pore-forming agent is selected from a surfactant, in particular cetyltrimethylammonium bromide (CTAB), diblock copolymers of ethylene oxide and of propylene oxide, and triblock copolymers of ethylene oxide and of propylene oxide.

6. The method according to any of claims 1 to 5, wherein step (d) is carried out after step (c) with a treatment selected from calcination, washing, for example with an organic solvent of the alcohol or acetone type, and UV insolation preferentially in a redox medium.

7. The method according to claim 6, wherein the calcination is carried out by circulating a dry gas inside the column, the temperature of this gas being comprised between 100°C and 500°C, this dry gas being advantageously oxygen or an inert gas such as helium or nitrogen.

8. The method according to any of claims 1 to 7, wherein the steps (a) to (c) are reproduced at least once before applying step (d).

9. The method according to any of claims 1 to 8, wherein the internal wall of the column is subject to a preparation treatment, able to reinforce the adhesion of the sol on the internal wall, such a treatment aiming at increasing the hydrophilicity of the internal wall, this preparation treatment being prior to step (a).

10. The method according to any of claims 1 to 9, wherein the internal wall of the column is subject to an activation treatment able to reinforce the adhesion of the stationary phase, such a treatment aiming at allowing covalent grafting between the gel and the internal wall during the condensation of the gel, this preparation treatment being prior to step (a).

11. The method according to claim 10, wherein the activation treatment of the internal wall of the column is carried out by oxidation of said internal wall, this oxidation being carried out by plasma, via a gas route or preferentially via a liquid route.

12. The method according to any of claims 1 to 11, wherein the internal wall of the column is in silicon, in silica, in molten silica, in polymer or in metal.

13. The method according to any of claims 1 to 12, wherein the stationary phase has a thickness of less than or equal to 3 µm, advantageously comprised between 50 nm and 1 µm, and preferentially between 200 and 500 nm.

14. The method according to any of claims 1 to 13, wherein the gas chromatography column is a capillary column with an internal diameter of less than or equal to 2 mm, advantageously less than or equal to 1 mm, preferably comprised between 50 µm and 500 µm, and more preferentially between 50 µm and 250 µm.

15. The method according to any of claims 1 to 14, wherein the gas chromatography column is a microcolumn for which at least one of the internal transverse lengths is less than or equal to 500 µm, advantageously less than or equal to 250 µm, and preferably comprised between 20 nm and 250 nm.

16. A capillary column which may be obtained by the method according to claim 14.

17. A microcolumn which may be obtained by the method according to claim 15.
